# EUROPÄISCHE PATENTANMELDUNG

(11) **EP 2 181 592 A1**
(43) Veröffentlichungstag der Anmeldung: **05.05.2010**
(21) Anmeldenummer: 09174724.6
(22) Anmeldetag: 01.11.2009
(51) Int. Cl.: A01L 7/02

(54) **Einlage für beschlagene Pferdehufe**

(30) Priorität: 03.11.2008 DE 202008014545 U
(71) Anmelder: Weihs, Frau Juliane, 23936 Grevesmuhlen (DE); Bureczek, Oliver, 23684 Scharbeutz (DE)
(72) Erfinder: Weihs, Frau Juliane, 23936 Grevesmuhlen (DE); Bureczek, Oliver, 23684 Scharbeutz (DE)
(74) Vertreter: Vonnemann, Gerhard

(57) **Zusammenfassung**

Die Erfindung betrifft eine Einlage (1) für mit Hufeisen (2) beschlagene Pferdehufe (3). Der Erfindung liegt die Aufgabe zugrunde, die ursprüngliche Massagewirkung zur Durchblutung von Hufstrahl, Hufsohle und Laufuntergrund wieder herzustellen und dem Huf Schutz vor Steinen zu bieten und ein Aufstollen durch Schnee im Winter zu verhindern. Im Krankheitsfall soll der Huf gegen Dreck und Verunreinigungen geschützt sein, ohne die Belüftung des Hufes zu verhindern. Zur Lösung dieser Aufgaben wird vorgeschlagen, die Einlage (1) frei schwingend an Federn (4) aufzuhängen. Dazu ist zwischen Eisen (2) und Einlage (1) ein Spalt (5) vorgesehen und die Feder (4) ist als Blattfeder (6) ausgebildet.

## Beschreibung

Die Erfindung betrifft eine Einlage für mit Hufeisen beschlagene Pferdehufe.

Heutzutage leiden Pferde zunehmend, egal ob Nutzung im Hochleistungssport oder Freizeit, an Hufkrankheiten und Fehlstellungen. Der Grund hierfür ist in dem erforderlichen Beschlag des Hufes mit Hufeisen zu sehen.

Das Hufeisen schützt den Huf bei jeglichen Untergründen vor Überempfindlichkeit und Druckstellen, da durch das Reiten der Tiere auf derartigen Untergründen der Huf an den Rändern abplatzen oder ausbrechen kann. Geschützt ist jedoch nicht der Strahl oder die Hufsohle. Der Strahl ist das empfindlichste Huforgan, da sich immer wieder Steine oder Kleinteile festsetzen können.

Weiter kann man mit einem fachmännischen Hufbeschlag Fehlstellungen korrigieren und somit die gerade im Leistungssport anfallenden Druck- und Stoßbelastungen die auf den Huf und somit auf die Gelenke und Sehnen wirken stark beeinflussen.

Es ist zu beachten, dass ein Hufbeschlag beziehungsweise eine Hufkorrektur nur durch einen Fachmann, zum Beispiel einem Hufschmied, mit speziellem Handwerkszeug zu bewerkstelligen ist. Dies ist meist mit erhöhtem Kosten- und Zeitaufwand verbunden. Eine Beschlagsperiode dauert ca. 6 - 8 Wochen und ist nach dem Stand der Technik nicht veränderbar/beeinflussbar in diesem Zeitraum.

So sehr ein Hufeisen die Nutzung von Reit- oder Zugtieren verbessert und ihnen das Laufen auf jeglichen Untergründen erlaubt, so sehr schränkt es auch die ursprüngliche Bewegung, Beweglichkeit und die gewünschte Kontaktierung des Hufes mit dem Untergrund ein.

Bei der anatomischen Betrachtung des Hufes stellt man fest, dass der direkt mit dem Untergrund in Kontakt stehende Huf eine Hornschicht besitzt, die wie eine Schuhsohle des Schuhs beim Laufen vor Unebenheiten oder Gegenständen zum Beispiel Steine schützt. Diese Hornschicht umschließt den Huf äußerlich komplett. Im Inneren des Hufes befinden sich die empfindlichen Gewebestrukturen, wie Nervenbahnen und Adern sowie das knöcherne Hufbein, als zentraler Punkt des Hufes. Bei der Bewegung auf dem Untergrund wird somit durch die Massagewirkung durch Be- und Entlastung des Hufes beim Auftreten und Hochheben die Blutzirkulation angeregt und wirkt durch alle vier Hufe auf den gesamten Kreislauf.

Durch den gegebenen Abstand zwischen Untergrund und Huf durch ein Hufeisen kann der natürliche Prozess durch die Anatomie des Hufes nicht mehr gewährleistet werden. Die Folge sind langfristige Durchblutungsstörungen, welche negativen Nachwirkungen auf sämtliche inneren Organe und deren Funktionen mit sich ziehen. Auch auf das Reiten hat es Einfluss. Es ergeben sich längere Aufwärmphasen für die Beine und den Sehnenapparat.

Herkömmliche und anerkannte Einlagen können nur direkt mit dem Hufeisen, nämlich während des sechs- bis achtwöchigen üblichen Hufbeschlags, fest montiert beziehungsweise eingesetzt werden. Nach der Montage beziehungsweise Befestigung ist bis zum nächsten Beschlag keine Änderung, Korrektur oder bei Verlust eine eigene erneute Montage möglich. Eine erneute Beauftragung des Hufschmieds mit einem erneuten Kostenaufwand sind die Folge.

Einlagen mit derartig nachteiligem Befestigungssystem sind beispielsweise in dem deutschen Gebrauchsmuster G 9405393.6 beschrieben. Die Hufeinlage ist dabei an drei Armen befestigt, die strahlenförmig zwischen Eisen und Huf eingespannt sind. Bei dem Befestigungssystem, wie es in der deutschen Patentschrift 294458 vorgeschlagen ist, besteht der Einlagehalter aus zwei gegen die Stollen abgestützten, gelenkig miteinander verbundenen Armen, deren Gelenkpunkt mit einem Dritten sich nach dem Vorderteil des erstreckenden Haltearm in Verbindung steht. Ein Niet hält die Arme im Gelenkpunkt zusammen. Durch geeignete Mittel lässt sich der Niet in einem Längstschlitz des dritten Haltearms in seiner jeweiligen eingestellten Lage verriegeln. Nachteilig an diesem Halter ist sein komplizierter Aufbau und seine unsichere Fixierung, die sich unter ungünstigen Bedingungen lösen kann. Eine ähnliche Lösung zur Halterung der Einlage schlägt auch die deutsche Patentschrift 707239 vor. Auch diese Halterung besitzt drei Befestigungspunkte, wobei der mittlere, nach vorne gerichtete Befestigungspunkt zwischen Eisen und Huf liegt. Bei den genannten Halterungen werden als Einlagen Strohsohlen verwendet, die schnell verschleißen. Eine einfache Ausführungsform zur Fixierung einer Sohle aus Stroh wird in der deutschen Patentschrift 141645 beschrieben. Die Haltevorrichtung besteht aus zwei gelenkig verbundenen Platten, die mit ihren freien Enden an den Schenkelenden des Hufeisens befestigt sind. Die Platten treffen sich im Winkel unter der Hufhöhlung und sind mit aufwärts gebogenen Spitzen versehen, um ein Verschieben der Sohle zu vermeiden. Die Strohsohlen schließen dabei dicht an dem Eisen ab. Auch durch solche Einlagen können Hohlräume geschaffen werden, die bei der täglichen Reinigung und Kontrolle des Hufes nicht erreicht werden können und somit ebenfalls den Beginn von Fäulnis oder Geschwüren z. B. bei Einschluss von Kleinteilen, wie z. B. Steinen, zur Folge haben.

Schließlich ist bekannt, dass einige handelsübliche Hufeinlagen oder Hufverfüllungen den Huf luftdicht einschließen und somit die Bildung von Fäulnis fördern, da eine nötige Luftzirkulation beziehungsweise Atmungsaktivität nicht mehr gewährleistet ist. Beispielsweise ist eine solche Hufverfüllung aus amerikanischen Patentschrift US 6,131,665 bekannt. Es wird darin vorgeschlagen, zum Schutze des Hufes eine Platte unter den Huf zu Nageln und in den natürlichen Hohlraum zwischen Platte und Huf ein Harz, wie beispielsweise Polyurethan, einzubringen.

Die Aufgabe der Erfindung besteht darin, eine Einlage für Pferdehufe mit Eisen vorzuschlagen, welche die ursprüngliche Massagewirkung zur Durchblutung von Hufstrahl, Hufsohle und Laufuntergrund wieder herstellen soll, dem Huf Schutz vor Steinen bietet und Aufstollen durch Schnee im Winter verhindert, sowie im Krankheitsfall von Dreck und Verunreinigungen schützt, ohne die Belüftung des Hufes zu verhindern. Darüber hinaus soll die Einlage durch einfache Handhabung vom Tierhalter selbst bei Bedarf angelegt oder abgenommen werden können.

Diese Aufgabe wird bei einer Einlage für mit Hufeisen beschlagene Pferdehufe, dadurch gelöst, dass die Einlage frei schwingend an Federn aufgehängt ausgebildet ist. Bei jedem Schritt des Pferdes, wird die Einlage Beschleunigungskräften ausgesetzt, die der Einlage eine entsprechende Bewegung aufprägen. Dadurch wird eine Art Pumpwirkung der Einlage erzielt, die den Hufinnenraum belüftet und den Huf vor Fäulnis schützt. Ein das Wachstum von Fäulnisbakterien begünstigendes Mikroklima wird dadurch vorteilhaft vermieden. Schmutz wird durch die erfindungsgemäß erzeugte Bewegung der Hufeinlage aus dem Hufinnenraum zum offenen Ende des Hufeisens transportiert.

Diese Bewegung wird noch gefördert, wenn zwischen Eisen und Einlage ein Spalt vorgesehen ist. Die Einlage kann sich frei bewegen. Reibung und eine Dämpfung der sich bewegenden Hufeinlage wird vermieden. Sollten trotzdem Fremdkörper zischen oder hinter die Einlage eingedrungen sein, so können diese aufgrund des Spaltes leichter entfernt werden. In dem Spalt kann zur Reinigung ein Hufpick/Hufkratzer angesetzt werden. Der Spalt wird deshalb vorteilhafter Weise ca. 2 mm gewählt. Bewährt hat sich ein Spalt zwischen 2 und 5 mm.

Zur federnden Aufhängung der Einlage hat sich besonders eine Blattfeder bewährt, weil sie flach ist und deshalb auch gleichzeitig die Funktion zur Lagesicherung der Einlage unter dem Huf übernehmen kann.

Mit Vorteil wird dazu die mindestens eine Blattfeder mit einem Ende am Hufeisen befestigt.

Mit ihrem anderen Ende wird die mindestens eine Blattfeder vorteilhaft in der Nähe des Schwerpunktes der Einlage befestigt. Dadurch werden andere unkontrollierte Kippschwingungen vermieden. Eine in der Mittelachse des Hufes, parallel zur Längsachse des Pferdes, vorgesehene Befestigung außerhalb des Schwerpunktes, kann zusätzlich eine Art Kippschwingung der Einlage um die Querachse erzeugen und den Transport von Schmutz aus dem Hufinnenraum vorteilhaft fördern.

Eine solche Bewegung ist auch bei einer Ausgestaltung der Erfindung möglich, bei der mindestens zwei Federn in der Nähe einer Schwerpunktachse befestigt sind, die vorzugsweise quer zur Längsachse des Hufes angeordnet ist.

Die Maßnahme, daß die Feder am Eisen auf der dem Huf abgewandten Seite befestigt ausgebildet ist, ermöglicht die Montage der Einlage unabhängig vom Zeitpunkt des Hufbeschlags.

Insbesondere weil die Feder mittels einer Schraube oder mit einem Stollen auf Turnieren temporär befestigt ist, kann jeder Tierhalter die Einlage nachträglich selbst befestigen, ohne auf einen Fachmann, d.h. den Hufschmied, zurückgreifen zu müssen. Das Stollenloch bleibt immer sauber, so dass kein Freikratzen nötig ist.

Zur einfachen Befestigung ist es von Vorteil, wenn die mindestens zwei Federn am hinteren Ende des Eisens befestigt sind, vorzugsweise mittels einschraubbarer Stollen bzw. Schrauben.

Dadurch, dass die Federn sich zwischen einem Punkt in der Nähe der Schwerpunktachse der Einlage und dem nächstgelegenen hinteren Ende des Eisens erstreckend angeordnet sind, ergibt sich eine trapezförmige Aufhängung der Einlage, mit besonders steifen Eigenschaften bei Drehbewegungen der Einlage um die Längsachse. Die zwar durch das Hufeisen minimierte Trachtenbewegung bleibt jedoch erhalten. Dies konnte mit bisherigen Systemen nicht erreicht werden, da die Arretierung fest zwischen Huf und Eisen lag.

Bewährt hat sich eine Ausgestaltung der Erfindung, bei der die Federn mittels Nieten an der Einlage befestigt ausgebildet sind.

Eine gute Haltbarkeit der Halterung lässt sich erreichen, wenn die Feder aus Stahl gefertigt ist, vorzugsweise mit einer Breite von 10 bis 20 mm und/oder einer Dicke von 1 bis 2 mm. Bei rostfreiem Stahl wird die Lebensdauer der Feder vorteilhaft verlängert. Bei Verwendung eines faserverstärkten Kunststoffs, insbesondere mit Carbonfasern, wird die Feder besonders leicht.

Dadurch, dass die Hufeinlage aus einem Wasser abweisenden und/oder stoßdämpfenden und/oder elastischem und/oder ph-neutralem Material gefertigt ist, wird dann ein dauerhaftes Feuchthalten verhindert, da die Einlage keine Feuchtigkeit aufnimmt. Der Ablauf eingedrungenen Wassers wird erleichtert.

Besonders lange hält die Hufeinlage, wenn die Hufeinlage als flexible Platte ausgebildet ist, die vorzugsweise aus faserverstärktem Kautschuk besteht. Die Dicke sollte mindestens der Stärke des Hufeisens entsprechen, damit die Einlage auch in Kontakt mit der Hufsohle treten kann. Durch den Kontakt wird die natürliche Massage des Hufes gewährleistet. Mittels einer handelsüblichen Schere kann die Kontur der Hufeinlage, variabel an jede individuelle Hufgröße oder Hufform angepasst werden. So kann das System auch auf mehrere Tiere übertragen werden. Die Hufeinlage verschleißfest auf jedem Untergrund und ist dabei absolut resistent gegen Witterungseinflüsse.

Die Maßnahme, dass der Raum zwischen dem Huf und der Einlage von einer Knetmasse ausgefüllt ist, fördert den Kontakt zur Hufsohle und damit die Massagewirkung der erfindungsgemäßen Hufeinlage. Diese Knetmasse kann vorteilhaft aus einem Silikonkautschuk bestehen. Zwei Komponenten werden im Verhältnis 1:1 gemischt und anschließend zwischen Einlage und Hufsohle eingelegt. Die Masse ist schnellabbindend und -härtend, wobei der Endzustand elastisch ist. Die Knetmasse ist witterungsbeständig und pH-neutral, was einen besonderen Vorteil darstellt. Beim ersten Aufsetzen des Hufes passt sich die Form der Knetmasse an die individuelle Form des Hufinnenraumes an, ohne an dem Horn des Tieres zu haften. Durch die erhöhte Masse wird die massierende Wirkung der Einlage gefördert.

Eine bevorzugte Ausführungsform der Erfindung wird beispielhaft an Hand einer Zeichnung erläutert. Die Figuren der Zeichnung zeigen im einzelnen:
- Figur 1: eine schematische perspektivische Ansicht von oben auf die erfindungsgemäßen Hufeinlage mit Hufeisen ohne Huf,
- Figur 2: eine schematische perspektivische Ansicht der in Figur 1 dargestellten Montagegruppe von unten,
- Figur 3: eine schematische perspektivische Ansicht von oben auf die erfindungsgemäßen Hufeinlage gemäß Figur 1 getrennt vom Hufeisen getrennt,
- Figur 4: eine schematische perspektivische Explosionsdarstellung der in Figur 1 dargestellten Montagegruppe von unten,
- .Figur 5: eine schematische perspektivische Ansicht von oben auf die erfindungsgemäßen Hufeinlage mit Hufeisen und angedeuteten Huf und
- Figur 6: eine schematische perspektivische Ansicht einer weiteren Ausführungsform der Montagegruppe von unten.

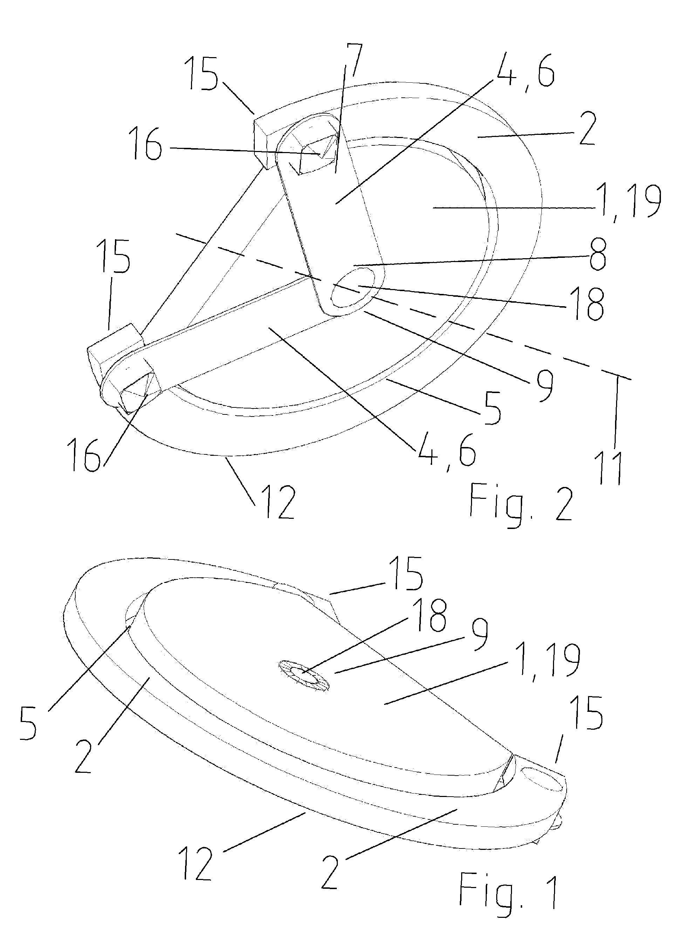

In den Figuren 1 bis 6 bezeichnet die Bezugsziffer 1 die erfindungsgemäße Hufeinlage.

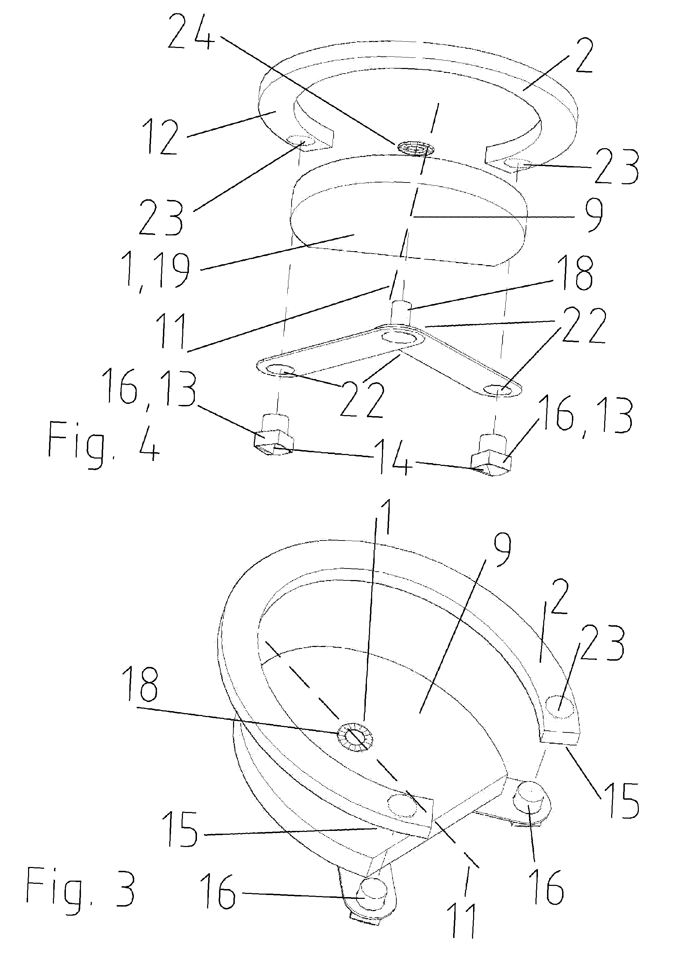

Die Hufeinlage 1 besteht aus einer witterungsbeständigen, relativ druckfesten und leicht flexiblen Platte 19 und den beiden damit verbundenen Federn 4, die als Blattfedern 6 ausgebildet sind und zur Befestigung je zwei Bohrungen 22, sichtbar in Figur 4, aufweisen. Die Platte 19 wird bevorzugt aus Kautschuk mit einer textilen Armierung hergestellt. Darüber hinaus ist die Verwendung jeglicher Arten von Gummi, Kunststoff oder Verbundwerkstoffe mit ähnlichen Eigenschaften möglich. Die kraft- und formschlüssige Verbindung der Federn 4 mit Einlage 1 und Eisen 2 wird mittels einer Schraub- und/oder Nietverbindung gewährleistet.

In Figuren 1 bis 5 sind die beiden Federn 6 mit ihren Enden 8 in etwa im Schwerpunkt 9 der Platte 19 mittels eines Niets 18 und der Nietplatte 24 mit der Hufeinlage 1 verbunden. Der Niet 18 durchdringt dabei die Einlage 1 und die beiden Federn 6, so daß diese zwischen Niet 18 und Nietplatte 24 als Widerlager eingespannt sind. Das andere Ende 7 der Federn 6 ist an je einem freien Schenkel des hinteren Ende 15 des Hufeisens 2 befestigt. Die beiden Metallplatten der Blattfedern 6 sind scherenartig beweglich beziehungsweise spreizbar und können somit an die unterschiedlichen Breiten eines jeden Hufes 3 beziehungsweise Hufeisens 2 angepasst und damit formschlüssig mittels vorhandener Stollen 16 verbunden werden. Die Mittelachsen des Niets 18 und der Stollen 16 bilden somit die Ecken eines gleichschenkligen Dreiecks in den Figuren 1 bis 5.

Der Schwerpunkt der Einlage 1 liegt auf der Längsachse 11. Wird der Niet 18 auf dieser Längsachse 11 etwas außerhalb des Schwerpunktes 9 angeordnet, was je nach dem Spreizwinkel der Federn 6 immer in unterschiedlichem Maße gegeben ist, so werden zusätzliche Kippbewegungen der Platte 19 um eine zur Längsachse 11 rechtwinkligen Kippachse erzwungen, die den Transport von Schmutz aus dem Hufinnenraum 20 erleichtern. Damit sich der Befestigungspunkt immer auf der Längsachse 11 ergibt, sind die Blattfedern 6 und insbesondere der Abstand der Bohrungen 22 gleichlang ausgeführt.

Um die Bewegung der Einlage 1 zu ermöglichen und möglichst gering zu dämpfen, ist zwischen Platte 19 und Eisen 2 ein umlaufender Spalt 5 vorgesehen. In dem Spalt kann man ggf. auch ein Hufmesser ansetzen, wenn eingedrungene Fremdkörper zu entfernen sind.

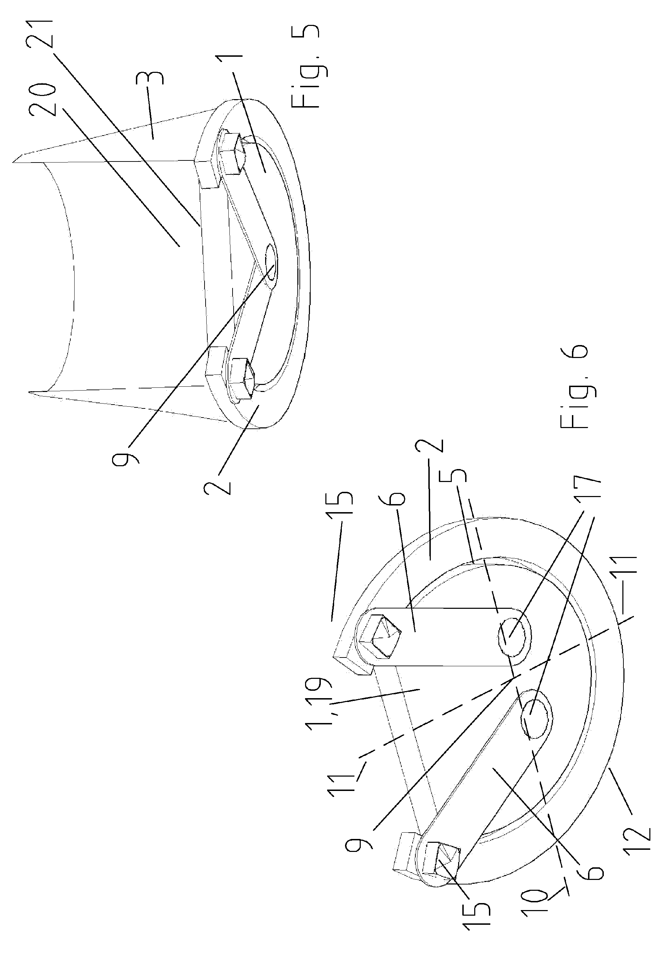

Figur 6 zeigt eine andere bewegliche Aufhängung der Einlage 1. Dort bilden die Mittelachsen der Befestigungspunkte 17 der Federn 6 mit den Stollen 16 die Ecken eines Trapezes. Die Punkte 17 sind dabei in der Nähe einer Schwerpunktachse 10 angeordnet, die rechtwinklig zur Längsachse 11 gewählt ist. Dadurch ergibt sich eine drehsteifere gefederte Aufhängung der Einlage 1 um die Längsachse 11 und somit eine Bevorzugungen von Bewegungen um die Achse 10 zur Unterstützung des Transports von Schmutz aus dem Hufinnenraum 20 in Richtung der offenen Seite des Eisens 2.

Der Platte19 kann, je nach Tiefe des Hufes, eine oder mehrere Aufsatzplatten durch Verkleben, Schrauben, Nieten, Nähen oder ähnlichen Verbindungen zugefügt werden, um einen Tiefenausgleich und die gewünschte Kontaktierung zwischen Einlage und Hufform und den Untergrund für die Massagewirkung zu erzielen. Im Falle von Deformierungen, stark krankhaft belasteten Hufen oder extremen Tiefen des Hufinnenraumes, kann mittels nachträglichem Einspritzen oder Unterspritzen von Silikon, selbst expandierendem Schaum oder ähnliches formveränderbaren Füllstoffen, wie ein durch Druck und/oder Wärme selbstverfestigendes Granulat oder ein schüttfähiges, mit Festiger erhärtendes Granulat, der Hufinnenraum zusätzlich ausgefüllt werden.

Als Befestigungspunkt und Basis für die Hufeinlage 2 dient lediglich das Hufeisen 2 mit den von der Außenseite 12 zugänglichen eingebauten Stollenlöchern 23 am hinteren Ende 15 des Eisens 2, wobei die Stollenlöcher 23 zur Befestigung Innengewinde aufweisen. Hier kann mit handelsüblichen flachen Stollen 16 die Blattfedern 6 und die mit ihnen verbundene Einlage 1 angebracht werden. Das weitere Anpassen der Einlage 1 beziehungsweise Platte 19 an eine gegebenen Hufform kann manuell durch den Tierhalter mit einer handelsüblichen Schere erledigt werden.

Für das Einbringen beziehungsweise Anlegen der Einlage 1 ist somit kein Fachmann mehr nötig. Es ist lediglich ein handelsüblicher Inbusschlüssel mit einer an die Innenkontur 14 (Figur 4) des Stollens 16 angepassten Außenkontur, beziehungsweise ein entsprechender Schraubendreher, zum Eindrehen der Stollen 16 erforderlich.

Durch das einfache und schnelle Befestigen beziehungsweise wieder Abschrauben, kann die Einlage1 jederzeit und überall genutzt werden. So kann auch bei Verlust einer Einlage, eine neue Einlage eigenständig montiert werden, da die Einlage 1 nicht dauerhaft mit dem Hufeisen 2 verbunden sein muss.

Als Material für die Hufeinlage 1 beziehungsweise Platte19 wurde Gummigranulat, Gummi, Kautschuk oder in der Beschaffenheit beziehungsweise Materialeigenschaft ähnliche Materialien gewählt, die einerseits starrer sind, um die nötige Form zu erhalten, andererseits so unnachgiebig sind, das der Huf 3 nicht verletzt, beziehungsweise die eigene Kontur und Formgebung erhalten bleibt. Die äußere Oberfläche des Hufes 3 ist in Figur 5 gezeigt. Im Inneren befindet sich zwischen der nicht dargestellten Hufsohle und der Platte 19 ein Raum 20, dessen Lage durch den Bezugspfeil angedeutet ist. In diesen Raum 20 kann zur Verbesserung der Wirkung der Einlage auch vorzugsweise eine elastische Knetmasse 21 eingefügt werden.

Durch die leichte Bewegung der montierten Einlage1 während der Laufbewegungen des Pferdes und der damit verbundenen Bewegungen des Hufes wird infolge der damit geschaffenen Pumpwirkung eine Luftzirkulation für das Hufhorn gewährleistet, jedoch der Einschluss von störenden Kleinstpartikeln, wie z. B. Steinen, verhindert, weil diese nach hinten in Richtung des Hufstrahles transportiert werden. Ebenfalls haben Unebenheiten oder verschiedene Unterböden keinen Einfluss auf das empfindliche Hufhorn.

Bei der Bewegung des Tieres wird durch den entstehenden Druck der Be- und Entlastung des Hufes durch die Hufeinlage ein Kontakt zwischen Untergrund und Hufsohle gewährleistet und die ursprüngliche natürliche Massage des Hufhorns wieder hergestellt. Die Blutzirkulation wird angeregt und das Kreislaufsystem in einen natürlichen Zustand gebracht.

Da die Hufeinlage 1 in direktem Kontakt mit dem Hufhorn steht und nachgiebig ist, wird das Wachstum des Hufhorns nicht eingeschränkt beziehungsweise beschränkt. Es besteht die Möglichkeit der zusätzlichen Verwendung von nachträglich eingebrachten Füllstoffen 21, wie z. B. Silikon, Schaum oder ähnlichem, die je nach Bedarf zugefügt oder wieder entfernt werden können. Dies ist eine notwendige Option zur Füllung des Hufinnenraumes 20, da jedes Tier einen unterschiedlich hohen oder flachen Huf besitzt und die Hufeinlage 1 dadurch individuell angepasst werden kann.

Ebenfalls kann individuell auf die Belastung des Hufes eingegangen werden. So kann bei großen Belastungen wie beispielsweise im Springsport durch vorgenannten Maßnahmen eine Stoß- und Druckminderung beziehungsweise Verteilung erzielt werden.

Sämtliche Einzelteile der Hufeinlage sind unabhängig voneinander und können ebenso zusammengesetzt oder angepasst werden. Es ist kein Fachmann zum Zusammensetzen des Systems oder zum Anlegen oder Abnehmen der Hufeinlage nötig. Alle Arbeiten können vom Tierhalter mit wenigen Handgriffen selbst durchgeführt werden einschließlich den eventuell erforderlichen Anpassungsarbeiten an der Platte 19. Für das Anbringen der Hufeinlage 1 ist lediglich ein handelsüblicher Schraubenschlüssel beziehungsweise Schraubendreher zu verwenden, welcher für das Eindrehen von Stollen 16 gegebenenfalls schon vorhanden ist. Darüber hinaus ist für den Zuschnitt der Platte 19 ein handelsübliche Mehrzweckschere erforderlich.

Bezugsziffernliste
- 1.: Einlage
- 2.: Hufeisen
- 3.: Pferdehufe
- 4.: Feder
- 5.: Spalt
- 6.: Blattfeder
- 7.: Ende
- 8.: Ende
- 9.: Schwerpunkt
- 10.: Schwerpunktachse
- 11.: Längsachse
- 12.: Seite
- 13.: Schraube
- 14.: Innenkontur
- 15.: hinteres End
- 16.: Stollen
- 17.: Punkt
- 18.: Niete
- 19.: Platte
- 20.: Raum
- 21.: Knetmasse
- 22.: Bohrungen
- 23.: Stollenlöcher
- 24.: Nietplatte

## Patentansprüche

1. Einlage (1) für mit Hufeisen (2) beschlagene Pferdehufe (3), **dadurch gekennzeichnet, dass** die Einlage (1) frei schwingend an Federn (4) aufgehängt ausgebildet ist.

2. Einlage nach Anspruch 1, **dadurch gekennzeichnet, dass** zwischen Eisen (2) und Einlage (1) ein Spalt (5) vorgesehen ist.

3. Einlage nach Anspruch 1 oder 2, **dadurch gekennzeichnet, dass** die Feder (4) zur Aufhängung der Einlage (1) als Blattfeder (6) ausgebildet ist.

4. Einlage nach Anspruch 1, 2 oder 3, **dadurch gekennzeichnet, dass** die mindestens eine Blattfeder (6) mit einem Ende (7) am Hufeisen (2) befestigt ist.

5. Einlage nach einem oder mehreren der vorhergehenden Ansprüche, **dadurch gekennzeichnet, dass** die mindestens eine Blattfeder (6) mit ihrem anderen Ende (8) in der Nähe des Schwerpunktes (9) der Einlage (1) befestigt ist.

6. Einlage nach einem oder mehreren der vorhergehenden Ansprüche, **dadurch gekennzeichnet, dass** mindestens zwei Federn (6) in der Nähe einer Schwerpunktachse (10) befestigt sind, die vorzugsweise quer zur Längsachse (11) des Hufes (3) angeordnet ist.

7. Einlage nach einem oder mehreren der vorhergehenden Ansprüche, **dadurch gekennzeichnet, dass** die Feder (6) am Eisen (2) auf der dem Huf (3) abgewandten Außenseite (12) befestigt ausgebildet ist.

8. Einlage nach einem oder mehreren der vorhergehenden Ansprüche, **dadurch gekennzeichnet, dass** die Feder (6) mittels einer Schraube (13) befestigt ist, die vorzugsweise eine Innenkontur (14) zum formschlüssigen Einstecken eines Werkzeugs aufweist.

9. Einlage nach einem oder mehreren der vorhergehenden Ansprüche, **dadurch gekennzeichnet, dass** mindestens zwei Federn (6) am hinteren Ende (15) des Eisens (2) befestigt sind, vorzugsweise mittels einschraubbarer Stollen (16).

10. Einlage nach einem oder mehreren der vorhergehenden Ansprüche, **dadurch gekennzeichnet, dass** die Federn (6) sich zwischen einem Punkt (17) in der Nähe der Schwerpunktachse (10) der Einlage (1) und dem nächstgelegenen hinteren Ende (15) des Eisens (2) erstreckend angeordnet sind.

11. Einlage nach einem oder mehreren der vorhergehenden Ansprüche, **dadurch gekennzeichnet, dass** die Federn (6) mittels Befestigungselemente, z. B. Nieten (18), Schrauben oder Steckverbindern an der Einlage (1) befestigt ausgebildet sind.

12. Einlage nach einem oder mehreren der vorhergehenden Ansprüche, **dadurch gekennzeichnet, dass** die Feder (6) aus, vorzugsweise nicht rostendem, Stahl gefertigt ist, vorzugsweise mit einer Breite von 10 bis 20 mm und/oder einer Dicke von 1 bis 2 mm.

13. Einlage nach einem oder mehreren der vorhergehenden Ansprüche, **dadurch gekennzeichnet, dass** die Hufeinlage (1) aus einem Wasser abweisenden und/oder stoßdämpfenden und/oder elastischem und/oder ph-neutralem Material gefertigt ist.

14. Einlage nach einem oder mehreren der vorhergehenden Ansprüche, **dadurch gekennzeichnet, dass** die Hufeinlage (1) als flexible Platte (19) ausgebildet ist, die vorzugsweise aus faserverstärktem Kautschuk besteht.

15. Einlage nach einem oder mehreren der vorhergehenden Ansprüche, **dadurch gekennzeichnet, dass** der Raum (20) zwischen dem Huf (3) und der Einlage (1) von einer Knetmasse (21) mindestens teilweise ausgefüllt ist.
